# EUROPÄISCHE PATENTANMELDUNG

(11) **EP 3 272 257 A1**
(43) Veröffentlichungstag der Anmeldung: **24.01.2018**
(21) Anmeldenummer: 17182144.0
(22) Anmeldetag: 19.07.2017
(51) Int. Cl.: A47J 37/04, A47J 37/07, A47J 27/04

(54) **EINSATZELEMENT FÜR EINE GARVORRICHTUNG UND GARVORRICHTUNG**

(30) Priorität: 19.07.2016 DE 102016113236
(71) Anmelder: Fashion Style Arenal S.L., 46470 Massanassa (ES)
(72) Erfinder: Cechmann, Norbert, 03730 Javea, Balcon al mar (ES)
(74) Vertreter: Hornig, Leonore

(57) **Zusammenfassung**

Die Erfindung betrifft eine Garvorrichtung 14, ein Einsatzelement 1 für eine Garvorrichtung 14 zum Garen eines Garguts 13 mittels eines Garmediums. Das Einsatzelement umfasst eine Platte 2, an der rohrförmige Garelemente 6 mit Garöffnungen 10 angeordnet sind, die in das Gargut 13 derart eingebracht werden, dass zumindest ein Teil der Garöffnungen 10 mit dem Gargut 13 belegt werden, und dass die Garelemente 6 beim gleichzeitigen Garen des Garguts mit dem Garmedium von außen mit dem Garmedium derart befüllt werden, dass das Garmedium im Bereich der Garöffnungen 10 ein Garen des Garguts 13 bewirkt.

## Beschreibung

Die Erfindung betrifft ein Einsatzelement für eine Garvorrichtung, ein Garelement und eine Garvorrichtung zum Garen eines Garguts mittels eines Garmediums.

Beispiele für Garvorrichtungen zum Garen eines Garguts mittels eines Garmediums aus dem Stand der Technik sind Kochtöpfe, Dampfkochtöpfe, Dampfgarer, Dampföfen, Dampfbacköfen, Umluftbacköfen etc., die sowohl aus dem privaten Bereich als auch aus der Gastronomie bekannt sind. Als Garmedium können Wasser oder andere geeignete Flüssigkeiten, Luft oder andere geeignete gasförmige Medien, Dampf oder Kombinationen daraus verwendet werden. Das Garmedium bewirkt hier ein Garen des Garguts mittels des Garmediums von außen.

Aus der US 3 908 532 ist eine automatische Bratvorrichtung für Braten und Geflügel bekannt, die einen Behälter mit einem fest verschließbaren Deckel umfasst. Gemäß einem Ausführungsbeispiel wird der Braten in den Behälter gelegt und dessen Boden mit Flüssigkeit bedeckt. An einer konkav geformten Platte sind Röhrchen mit zwei offenen Enden befestigt, die entlang ihren Wänden jeweils kleine Öffnungen aufweisen. Die Platte wird auf den Braten gesteckt. Wenn der Behälter zum Rösten des Fleisches erhitzt wird, steigt von der erhitzten Flüssigkeit Dampf nach oben und wird an der konkaven Platte kondensiert, so dass Flüssigkeit nach unten tropft und den Braten befeuchtet. Auch soll Dampf durch die freien Öffnungen in die Röhrchen gelangen und den Braten von innen erwärmen. Gemäß einem zweiten Ausführungsbeispiel ist auf dem Boden des Gefäßes ein Behälter zur Aufnahmen von Flüssigkeit vorgesehen. Die Behälterwand ist in den Boden des Behälters integriert. Der Behälter hat einen verschließbaren Deckel, auf welchem Röhrchen mit zwei offenen Enden und Öffnungen entlang der Wände ausgebildet sind. Der Behälter bildet mit dem Deckel eine verschließbare Kammer. Die Kammer kann mit einer Flüssigkeit gefüllt werden. Der Boden der Bratvorrichtung kann wie oben zusätzlich mit der Flüssigkeit außerhalb der Kammer bedeckt werden. Letztere wird wie oben zum Befeuchten des Fleisches während des Bratvorgangs verwendet. Dampf der Flüssigkeit in der Kammer, der während des Bratvorgangs entsteht, kann in die Röhrchen auf dem Deckel der Kammer gelangen und den Braten von innen erwärmen.

Bei diesem Stand der Technik wird ein Garen des Garguts durch Wärmezufuhr, wie durch Grillen oder Braten, also ohne ein Garmedium, von außen bewirkt. Das Garmedium, hier aus Wasser oder Flüssigkeit entstehender Dampf, wird zum zusätzlichen Befeuchten und zum Erwärmen der Röhrchen verwendet. Auch gelangt das Garmedium in die Röhrchen, soweit diese nicht mit dem Gargut ausgefüllt sind.

Aus der US 2011/0226135 A1 ist eine Vorrichtung zum Kochen von aufgespießter Nahrung, wie Geflügel oder Braten bekannt. Es ist ein Behälter mit einem abdichtenden Deckel vorgesehen, in welchen eine Flüssigkeit oder ein Partikelstoff eingebracht werden kann. Auf dem Deckel sind Röhrchen angeordnet, auf welchen die Nahrung aufgespießt werden kann. Beim Erhitzen des Stoffes in dem Behälter, gelangt dieser durch seitliche Öffnungen oder durch ein Ventilsystem in die Röhrchen und durch Öffnungen in der Wand der Röhrchen in das Innere des Fleisches. Diese Vorrichtung wird mit einem Grill oder Ofen kombiniert und in diesen gestellt. Auch hier wird zusätzlich zu einem Garprozess von außen ohne direkten Kontakt mit einem Garmedium ein zusätzliches Garmedium verwendet, um ein zusätzliches Garen von innen zu bewirken.

Aus der US 6 502 501 B1 ist eine Vorrichtung zum Kochen von Geflügel bekannt, die aus einer flachen Pfanne mit einem Deckel bekannt. Auf dem Deckel ist zentral eine Öffnung vorgesehen, auf welcher ein Turm mit Öffnungen vorgesehen werden kann. Auf dem Turm wird das Geflügel oder ein Truthuhn so aufgebracht, dass der Turm in deren Hohlraum endet. Die Pfanne wird mit Flüssigkeit gefüllt und mit dem Deckel verschlossen. Die Vorrichtung wird so in einen Grill oder Ofen gestellt. Während es Grill- oder Bratvorgangs wird Dampf in den Hohlraum des Geflügels infundiert, so dass dieser aromatisiert wird. Auch hier wird zusätzlich zu einem Garvorgang von außen ohne Garmedium ein zusätzliches Aromatisieren und Garen von Innen mittels eines Garmediums bewirkt.

Der Erfindung liegt die Aufgabe zugrunde, eine Garvorrichtung zu schaffen, die einfach und kostengünstig ist, und mit der ein schnelles und gleichmäßiges Garen des Garguts möglich ist.

Diese Aufgabe wird durch ein Einsatzelement für eine Garvorrichtung mit den Merkmalen des Patentanspruchs 1 sowie durch eine Garvorrichtung mit den Merkmalen des Patentanspruchs 14 gelöst.

Das erfindungsgemäße Einsatzelement und die erfindungsgemäße Garvorrichtung sind so ausgebildet, dass das Garen des Garguts von außen und von innen mit demselben Garmedium durchgeführt werden kann. Es wird eine Garvorrichtung verwendet, die bereits so ausgebildet ist, dass das Garen des Garguts mit einem Garmedium, nämlich Wasser oder andere geeignete Flüssigkeiten, Luft oder andere geeignete gasförmige Medien, Dampf oder Kombinationen daraus, erfolgt. Die Platte des Einsatzelements ist so ausgebildet, dass sie in der Garvorrichtung geeignet angeordnet werden kann. Hierzu ist nur eine geeignete Größe erforderlich. Das Einsatzelement wird in der Garvorrichtung so angeordnet, dass das Garmedium, das in der Garvorrichtung ohnehin zum Garen des Garguts von außen verwendet wird, auch in die offenen Enden der Garelemente eindringen kann. Da die Garelemente an ihrem anderen Ende geschlossen und während des Garvorgangs an den Garöffnungen zumindest größtenteils mit dem Gargut von außen belegt sind, baut sich in den Garelementen ein Druck auf, der dazu führt, dass das Garmedium an den Garöffnungen in Kontakt mit dem Gargut kommt und dieses von innen gart. Da dasselbe Garmedium zum Garen von Innen und Außen verwendet wird, ist keine zusätzlich Kammer erforderlich, in der das Garmedium eingeschlossen und unter Druck gehalten werden muss. Somit ist die Konstruktion des Einsatzelements und der Vorrichtung einfach und damit auch kostengünstig.

Da die Garelemente auf einer Seite geschlossen sind, gelangt auch kein Gargut in die Garelemente, so dass zum einen das Gargut nicht beschädigt wird und zum anderen das Garmedium ohne Hindernis in die Garelemente und zu den Garöffnungen gelangen kann, so dass das Gargut auch im Umkreis der Garelemente von innen gleichmäßig gegart werden kann.

Bevorzugte Ausführungsbeispiele der Erfindung sind in den Unteransprüchen offenbart.

Wenn der Innendurchmesser der Garelemente jeweils kleiner als 1cm ist, wird verhindert, dass das Gargut durch das Einbringen der Garelemente beschädigt wird. Dies ist insbesondere beim Garen von Fleisch vorteilhaft, da dieses sich dann nach dem Garen und nach dem Entfernen der Garelemente wieder zusammenzieht, so dass keine Löcher vorhanden bleiben und auch der Saft des Fleisches so nicht verlorengeht.

Auch wird es bei dieser geringen Dicke der Garelemente möglich, dass viele Garelemente in dem Gargut angeordnet werden können. Hierdurch wird ein gleichmäßiges und schnelles Garen des Garguts von innen ermöglicht. Ein schnelles und gleichmäßiges Garen des Garguts kann erzielt werden, wenn die Garelemente in einem gleichen Abstand zueinander angeordnet sind, der zwischen 2 und 4 cm beträgt.

Wenn das Einsatzelement zum Garen von Fleisch verwendet werden soll, ist es vorteilhaft, wenn das Garelement einen Innendurchmesser von maximal 8 mm aufweist und der Abstand zwischen den Garelementen zwischen 3 und 4 cm beträgt. Wenn das Einsatzelement zum Garen von Hülsenfrüchte, Reis oder ähnlichen körnigen Nahrungsmitteln verwendet wird, ist es vorteilhaft, wenn der Innendurchmesser der Garelemente maximal 9 mm und der Abstand der Garelemente zueinander zwischen 2 und 3 cm betragen. So wird ein optimales schnelles Garen ohne Beeinträchtigung des jeweiligen Garguts erreicht. Die Wanddicke der Garelemente wird je nach Material geeignet zur Stabilität und Wärmeleitung gewählt. Sie liegt typischerweise zwischen 1 und 2 mm.

Es ist vorteilhaft, wenn die Garöffnungen entlang der Wand des jeweiligen Garelements zueinander versetzt und über die Wand verteilt angeordnet sind. So können viele Garöffnungen auf der Wand der Garelemente untergebracht werden, wodurch ein noch gleichmäßigeres und schnelleres Garen des Garguts von innen bewirkt wird. Es ist dabei günstig, wenn die Garöffnungen entlang der Längsrichtung der Garelemente in Reihen angeordnet sind, wobei die Garöffnungen auf zueinander benachbarten Reihen in Längsrichtung zueinander versetzt angeordnet sind.

Wenn die zueinander benachbarte Garelemente auf der Platte derart angeordnet sind, dass die Garöffnungen von benachbarten Garelementen zueinander versetzt angeordnet sind, kann ebenfalls ein gleichmäßigeres und schnelleres Garen erzielt werden. Die Garöffnungen von voneinander benachbarten Garelementen können sowohl in Längsrichtung der Garelemente als auch in Querrichtung, gleichzeitig oder einzeln, zueinander versetzt angeordnet sein. Je gleichmäßiger die Garöffnungen in dem Gargut verteilt sind, desto gleichmäßiger und schneller kann der Garprozess des Garguts von Innen erfolgen.

Dadurch, dass das Garelement gemäß der Erfindung in den vorgegeben Bereich des Garguts eingebracht wird, werden die Garöffnungen in diesem Bereich des Garelements von dem Gargut belegt. Wenn das Garelement mit dem Garmedium befüllt wird, kommt das Garmedium mit dem Gargut im Bereich der Garöffnungen in Kontakt. Hierdurch wird an diesen Stellen ein Garen des Garguts bewirkt. Erfindungsgemäß erfolgt somit ein Garen im Innern des Garguts. Hierdurch kann ein besonders schnelles Garen des Garguts bewirkt werden. Der Garprozess des Garguts kann erfindungsgemäß weiter dadurch beschleunigt werden, dass das Garen im Innern des Garguts mit einem herkömmlichen Garen des Garguts von außen kombiniert wird.

Wenn der Garprozess gemäß der Erfindung in einer Garvorrichtung durchgeführt wird, werden das Garmedium, das Gargut und das Einsatzelement mit dem Garelement in die Garvorrichtung derart eingebracht, dass das Garelement in den vorgegeben Bereich des Garguts eingebracht ist, so dass in dem vorgegeben Bereich entsprechend die Garöffnungen in der Wandfläche des Garelements von dem Gargut belegt werden.

Gemäß der Erfindung wird erreicht, dass der Garprozess besonders schonend erfolgt. Daher werden bei dem Garprozess Nährstoffe, Mineralien, Vitamine und dergleichen erhalten. Geschmacksstoffe, wie Gewürze u.a. können durch das Garmedium dem Gargut mit Hilfe des Garelements direkter zugeführt werden und haben somit eine intensivere Wirkung. Nährstoffe, Garproduktflüssigkeiten und dergleichen, die aus während des Garprozesses aus dem Gargut austreten, können dem garenden Gargut während des Garprozesses mit dem Garmedium über die Garelemente immer wieder zugeführt werden, so dass sie während des Garprozesses nicht verloren gehen.

Mit dem Haltemittel kann das Garelement in einer vorgegeben Position gehalten werden. In dieser Position ist das offene Ende des Garelements derart angeordnet, dass das Garmedium durch das offene Ende des Garelements in das Garelement gelangen kann. Das Garelement befindet sich gegenüber dem Gargut in einer Position, die zum effektiven Garen geeignet ist. Wenn die Garvorrichtung geschlossen wird, kann der Garprozess wie bei den herkömmlichen Verfahren beginnen. Das Gargut wird mit dem Garmedium von außen gegart. Zusätzlich erfolgt erfindungsgemäß ein Garen des Garguts von Innen, an den mit dem Gargut belegten Garöffnungen des Garelements. Wesentlich ist, dass das Garmedium durch das offene Ende des Garelements in das Garelement gelangt und dass sich in dem Garelement ein Druck aufbauen kann, der dafür sorgt, dass im Bereich der Garöffnungen ein Garen des Garguts mittels des Garmediums erfolgt.

Gemäß der Erfindung kann ein Garelement verwendet werden, dass eine geeignete Form aufweist und derart angeordnet wird, dass ein möglichst großer Bereich im Innern des Garguts von dem Garelement und den sich in der Wandfläche befindenden Garöffnungen durchdrungen wird. Es können erfindungsgemäß auch mehrere Garelemente zum Garen des Garguts von Innen verwendet werden.

Voreilhafterweise ist die Querschnittsfläche des offenen Endes des Garelements so gewählt, dass sie ein Mehrfaches der Querschnittsfläche jeder der Garöffnungen beträgt. Hierdurch wird gewährleistet, dass sich in dem Garelement ein Druck aufbaut, der für ein zuverlässiges Garen des Garguts im Bereich der Garöffnungen sorgt. Es ist dabei vorteilhaft, wenn die Querschnittsfläche des offenen Endes des Garelements wenigstens etwa 2- bis 3-mal, bevorzugt etwa 4-mal so groß oder größer ist als die Querschnittsfläche der Garöffnungen.

Die Anzahl, Form, Anordnung und genaue Größe der Garöffnungen kann entsprechend der gewünschten Anwendung optimiert und gewählt werden. Hierbei ist das Garmedium, die Art des Garguts, die Menge des Garguts, die Größe der Garvorrichtung zu berücksichtigen. Diese Einzelheiten liegen im Ermessen des Fachmanns und können von diesem je nach Anwendung geeignet gewählt werden.

Das erfindungsgemäße Einsatzelement ist für eine Garvorrichtung geeignet, wie sie oben in Bezug auf den Stand der Technik beschrieben ist. Bei der Verwendung des Einsatzelements in einer derartigen Garvorrichtung, in der Garen eines Garguts mit einem Garmedium von außen erfolgt, wird das Garen des Garguts mittels der Garelemente von innen mit dem Garen von außen in der Garvorrichtung kombiniert. Es kann hier erfindungsgemäß das Garmedium, das der Garvorrichtung zum Garen des Garguts während des Garprozesses vorhanden ist, gleichzeitig den Garelementen zum Garen des Garguts von innen zugeführt werden. Im Rahmen der Erfindung ist es aber auch möglich, das Gargut nur mittels der Garelemente bzw. des Einsatzelements von innen zu garen. In diesem Fall kann das Garmedium auf eine beliebige für den Fachmann mögliche Art und Weise den Garelementen zugeführt werden. In einem solchen Fall muss die Garvorrichtung nicht geschlossen sein. Sie dient dann nur dazu, dass das/die Garelemente und das Gargut in einer zum Garen des Garguts geeigneter Position gehalten werden können.

Gemäß einem vorteilhaften Ausführungsbeispiel der Erfindung sind das Garelement und das Haltemittel miteinander verbunden und einstückig ausgebildet. Somit ist das Einsatzelement stabil und leicht handhabbar. Wenn es für bestimmte Anwendungen vorteilhaft ist, können das Garelement oder die Garelemente und das Haltemittel auch als separate Teile ausgebildet werden oder lösbar miteinander verbunden sein. Günstigerweise ist das Garelement im Bereich des offenen Endes mit dem Haltemittel verbunden. So kann das Garelement mit dem geschlossenen Ende, leicht in das Gargut eingeführt werden. Das Einsatzelement kann dann auf der entgegengesetzten Seite des Garelements bzw. der Garelemente mit dem/den offenen Enden mit dem Haltemittel in der Garvorrichtung gehalten werden.

Auch ist es günstig, wenn das Garelement/die Garelemente stäbchenförmig mit jeweils einer Spitze an dem geschlossenen Ende ausgebildet sind. So können sie besonders leicht in ein Gargut eingebracht werden, insbesondere, wenn es sich um ein festes Gargut wie Fleisch oder Fisch handelt. Auch bei Reis oder Hülsenfrüchten als Gargut ist ein als Spitze ausgebildetes Ende vorteilhaft, da diese dann nicht von dem Garelement zerdrückt werden, wenn das Garelement auf einer Fläche aufstößt, auf der auch das Gargut auf- oder anliegt. Auch nicht stäbchenförmige Garelemente können am geschlossen Ende eine Spitze aufweisen, um das Eindringen in das Gargut zu erleichtern.

Gemäß einem vorteilhaften Ausführungsbeispiel der Erfindung umfasst das Haltemittel eine Platte, in der Garmediumsöffnungen vorgesehen sind, wobei mehrere Garelemente jeweils mit dem offenen Ende derart mit der Platte verbunden sind, dass das Garmedium durch die Garmediumsöffnungen und durch die offenen Enden der Garelemente in die Garelemente gelangen kann. Günstigerweise sind die Garelemente jeweils im Bereich einer Garmediumsöffnung an der Platte befestigt. Die Größe der Platte kann hier geeignet zum Einsetzen der Platte in die Garvorrichtung gewählt werden. Sie kann sowohl korrespondierend zu der speziellen Garvorrichtung ausgebildet sein oder so gewählt werden, dass sie für mehrere Garvorrichtungen unterschiedlicher Größe verwendet werden kann. Letzteres ist insbesondere bei der Verwendung in Dampfkochtöpfen oder Kochtöpfen für die private Anwendung vorteilhaft.

Es ist günstig, wenn die Garelemente über den Querschnitt der Platte gleichmäßig verteilt, von der Platte wegweisend und parallel zueinander angeordnet sind, da so ein gleichmäßiges Garen des Garguts von innen gewährleistet wird. Bevorzugt sind die Garelemente senkrecht zu der Platte angeordnet. Dann können die Garelemente besonders einfach mit der Platte in das Gargut eingebracht und in der Garvorrichtung in einer vorgegeben Lage gehalten werden. Es ist aber auch eine schräge Anordnung der Garelemente gegenüber der Platte im Rahmen der Erfindung möglich.

Vorteilhafterweise kann die die Anzahl der Garelemente sowie der Abstand der Garelemente zueinander geeignet für ein vorgegebenes Gargut gewählt werden. Diese Größen können auf die Art des Garguts, auf die Menge des Garguts und/oder auf die Größe der Garvorrichtung abgestimmt werden. Beispielsweise ist es vorteilhaft, wenn zum Garen von Fleisch oder Fisch ein größerer Abstand zwischen den Garelementen gewählt wird als zum Garen von Reis und Hülsenfrüchte. Ein günstiger Abstand der Garelemente voneinander zum Garen von Fleisch beträgt etwa zwischen 3 und 4 cm; ein günstiger Abstand der Garelemente voneinander zum Garen von Reis oder Hülsenfrüchte beträgt etwa zwischen 2 und 3 cm. Der Abstand der Garelemente voneinander kann günstigerweise auch abhängig von der Größe und dem Durchmesser oder dem Querschnitt der Garvorrichtung gewählt werden.

Ebenso kann die Länge der Garelemente für ein bestimmtes Gargut und/oder für eine bestimmte Anwendung, insbesondere für eine bestimmtes Garmedium und/oder eine bestimmte Garvorrichtung geeignet gewählt werden. Die Länge der Garelemente kann so gewählt sein, dass die Garelemente innerhalb eines vorgegeben Garguts enden. Dies ist beispielsweises vorteilhaft, wenn Fleisch als Gargut mittels Dampf als Garmedium gegart wird. Da die Garelemente das Fleisch nicht durchstoßen, wird verhindert, dass beim Garen Fleischsaft aus dem Fleisch gelangen kann, sondern in dem Fleisch erhalten bleibt.

Auch kann die Länge der Garelemente so gewählt sein, dass einzelne Garöffnungen auf der Seite mit den geschlossenen Enden der Garelemente nicht mit Gargut bedeckt werden. Dies ist vorteilhaft, wenn als Garmedium Luft oder eine Flüssigkeit verwendet werden. Hier werden das Einsatzelement und das Gargut so angeordnet, dass die offenen Enden der Garelemente nach unten gerichtet sind, so dass sie das Garmedium von unten aufnehmen können und dass die geschlossenen Enden der Garelemente nach oben weisen und aus dem Gargut soweit herausragen, dass einzelne Garöffnungen sich außerhalb des Garguts befinden. Dies ist insbesondere zum Garen von Fleisch, Fisch und ähnlichem Gargut mit Luft in einem Umluftofen oder mit Wasser in einem Topf vorteilhaft. Das Garmedium kann aus den nicht mit dem Gargut belegten Öffnungen, die aus dem Gargut herausragen, herausströmen und in die Garvorrichtung gelangen. Das Garmedium gelangt somit in den Bewegungskreislauf des Garmittels. Das Garmittel kann durch die offenen Enden wieder in die Garelemente nachgeliefert werden. Durch diesen Kreislauf des Garmittels kann den Garelementen während des Garprozesses kontinuierlich Wärme zugeführt werden. Bei einem Topf mit Wasser oder einer Flüssigkeit ist zu beachten, dass das Gargut mit der Flüssigkeit bedeckt wird und die nicht belegten Garöffnungen aus der Flüssigkeit herausragen.

Gemäß einem vorteilhaften Ausführungsbeispiel der Erfindung können die Garelemente mit einem rechteckigen Querschnitt ausgebildet sein. Es können dann in den breiteren Seiten der Garelemente längliche Öffnungen vorgesehen sein, die horizontal angeordnet sind. Auf diese Weise lassen sich viele Öffnungen in den Garelementen unterbringen, so dass das Gargut während des Garprozesses gut mit dem Garmedium versorgt werden kann. Auch lassen auf der Längsseite von Garelementen mit einem rechteckigen Querschnitt Öffnungen mit einer relativ großen Querschnittsfläche anordnen. Wenn als Haltemittel eine Platte verwendet wird, an welcher mehrere Garelemente angeordnet werden bzw. sind, können bei diesem Ausführungsbeispiel sehr viele Garelemente verwendet werden, da sich die Garelemente flach bzw. dünn ausbilden lassen. Wenn die Garelement parallel zueinander verlaufen, können jeweils eine Reihe von Garelementen mit den Längsseiten in einer Richtung angeordnet werden und die danebenliegende Reihe von Garelementen mit den Längsseiten in einer hierzu um 90° gedrehten Anordnung. Wenn auf den Längsseiten längliche horizontal angeordnete Öffnungen vorgesehen sind, lässt sich das Gargut mit einer sehr großen Menge des Garmediums von Innen versorgen, so dass ein sehr effektives Garen von innen erfolgen kann.

Gemäß einer vorteilhaften Weiterbildung der Erfindung ist eine erste Abstandseinrichtung vorgesehen, mit welcher ein vorgegebener Abstand zwischen den offenen Enden der Garelemente und einer vorgegebenen Fläche der Garvorrichtung gewährleistet ist. Auf diese Weise kann sichergestellt werden, dass das Garmedium während dem Garprozess durch die offenen Enden in die Garelemente gelangen kann.

Gemäß einem Ausführungsbeispiel der Erfindung kann eine zweite Abstandseinrichtung vorgesehen sein, mit welcher ein vorgegebener Abstand zwischen den geschlossenen Enden der Garelemente und einer vorgegebenen Fläche der Garvorrichtung gewährleistet ist. Dies ist insbesondere dann vorteilhaft, wenn die Garelemente in der Garvorrichtung so angeordnet werden, dass die geschlossenen Enden nach unten weisen und innerhalb des Garguts enden sollen. Das Gargut kann dann auf der vorgegebenen Fläche aufliegen. Bei der vorgegeben Fläche kann es sich je nach Ausführungsbeispiel der Erfindung um einen Einsatz in der Garvorrichtung handeln, oder um eine Boden- oder Wandfläche der Garvorrichtung selbst. Die erste und die zweite Abstandseinrichtung können auch identisch sein.

Günstigerweise kann die zweite Abstandseinrichtung Abstandsstäbe aufweisen, die fest und von der Platte wegweisend mit der Platte des Einsatzelements verbunden sind und deren Anordnung an der Platte und Länge so gewählt sind, dass ihre von der Platte wegweisenden Enden über die geschlossenen Enden der Garelemente hinausragen. Die Abstandsstäbe sorgen auf einfache Weise dafür, dass das Gargut, z.B. Fleisch oder Fisch sowohl beim Einbringen der Garelement als auch beim Garprozess nicht durchgestochen wird und dass es auf einer Fläche aufliegen kann. Bevorzugt weisen die Abstandsstäbe von der Platte senkrecht nach unten. Es sind aber auch schräge Anordnungen möglich. Die Abstandsstäbe können aus einem massiven Material gebildet sein, so dass eine gute Stabilität und Standfestigkeit gewährleistet ist. Je nach Ausführungsart und Material können die Abstandsstäbe auch röhrenförmig ausgebildet sein und entweder an beiden Enden offen, so dass das Garmedium durch sie an das andere Ende geleitet werden kann oder an beiden Enden geschlossen ausgebildet sein. Dies kann der Fachmann je nach Anforderungen an Stabilität und Wärmeverhalten geeignet wählen.

Vorteilhafterweise sind die Abstandsstäbe derart angeordnet, dass sie beim Aufstellen des Einsatzelements auf einer Fläche der Garvorrichtung eine vorgegebene Stabilität gewährleisten. Dabei ist es günstig, wenn die Abstandselemente im Randbereich der Platte gleichmäßig verteilt angeordnet sind.

Auch ist es vorteilhaft, wenn das Einsatzelement aus Metall und/oder aus hitzebeständigem Kunststoff und/oder einem anderen hitzebeständigen Materialgebildet ist. Wenn das Einsatzelement für einen Umluftofen mit Luft als Garmedium verwendet wird, ist es vorteilhaft, wenn das Einsatzelement aus Metall gebildet ist, da so eine sehr gute Wärmeleitung erzielt werden kann.

Die Aufgabe der Erfindung wird auch durch eine Garvorrichtung gelöst, welche ein Einsatzelement mit den oben beschriebenen erfindungsgemäßen Merkmalen umfasst. Als Garvorrichtung können Garvorrichtungen aller Art verwendet werden, bei denen das Garen eines Garguts mittels eines Garmediums erfolgen kann, wie dies auch oben beschrieben wurde. Günstigerweise ist die Garvorrichtung so ausgebildet, dass das Garmedium während des Garprozesses im Wesentlichen in der Garvorrichtung erhalten bleibt.

Zudem wird die Aufgabe der Erfindung durch ein Garelement gelöst, welches zur Verwendung in einem erfindungsgemäßen Einsatzelement geeignet ist.

Weitere Einzelheiten, Merkmale und Vorteile der vorliegenden Erfindung ergeben sich aus der nachfolgenden Beschreibung bevorzugter Ausführungsbeispiele unter Bezugnahme auf die Zeichnung.

Es zeigen:
- Fig. 1: Eine schematische Darstellung eines Ausführungsbeispiels eines erfindungsgemäßen Einsatzelements in Draufsicht,
- Fig. 2: eine schematische Darstellung des Ausführungsbeispiels des erfindungsgemäßen Einsatzelements aus Figur 1 im Querschnitt,
- Fig. 3: eine schematische Darstellung des Ausführungsbeispiels des erfindungsgemäßen Einsatzelements aus Figur 1 in perspektivischer Darstellung,
- Fig. 4: eine schematische Darstellung einer erfindungsgemäßen Garvorrichtung mit dem Einsatzelement aus Figur 1 bis 3 im Querschnitt,
- Fig. 5: eine schematische Darstellung eines anderen Ausführungsbeispiels des erfindungsgemäßen Einsatzelements in Draufsicht,
- Fig. 6: eine schematische Darstellung des Ausführungsbeispiels des erfindungsgemäßen Einsatzelements aus Figur 5 in perspektivischer Darstellung,
- Fig. 7: eine schematische Darstellung eines weiteren Ausführungsbeispiels des erfindungsgemäßen Einsatzelements in einer Garvorrichtung im Querschnitt und
- Fig. 8: eine schematische Darstellung des weiteren Ausführungsbeispiels des erfindungsgemäßen Einsatzelements in einer anderen Garvorrichtung im Querschnitt.

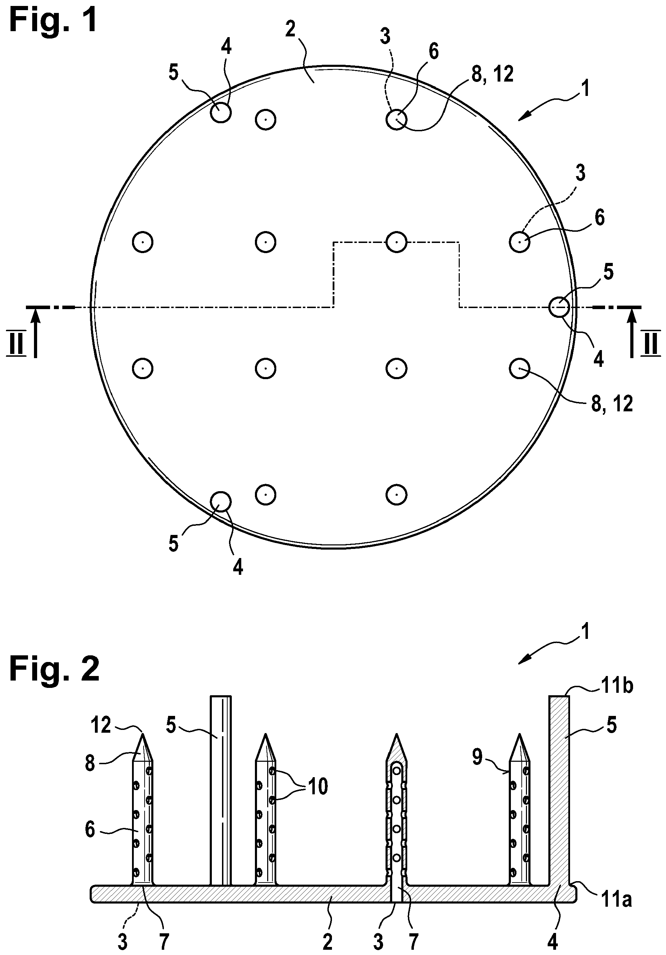

Figur 1 zeigt ein erstes Ausführungsbeispiel eines erfindungsgemäßen Einsatzelements 1 in einer Draufsicht. Das Einsatzelement 1 weist eine Platte 2 auf, in welcher Garmediumsöffnungen 3 vorgesehen sind, die in gleichmäßigen Abständen voneinander über den Querschnitt der Platte 2 verteilt sind. Im Bereich der Garmediumsöffnungen 3 sind Garelemente 6 vorgesehen, die in der Abbildung nach oben weisen und geschlossene Enden 8 aufweisen, die als Spitzen 12 ausgebildet sind. Zudem sind Abstandsstabbefestigungen 4 vorgesehen, die gleichmäßig entlang des Randbereichs der Platte 2 verteilt angeordnet sind.

In Figur 2 ist das Einsatzelement 1 aus Figur 1 im Querschnitt nach der Schnittlinie II in Figur 1 gezeigt und so angeordnet, dass die Platte 2 nach unten weist. In dieser Darstellung kann das Einsatzelement 1 auf eine Unterlage aufgestellt werden. An der Platte 2 sind rohrförmige Garelemente 6 befestigt, die jeweils ein offenes Ende 7 und ein geschlossenes Ende 8 aufweisen. Die Garelemente 6 sind jeweils mit dem offenen Ende 7 im Bereich einer Garmediumsöffnung 3 mit der Platte 2 verbunden, so dass die Garmediumsöffnungen 3 mit den offenen Enden 7 der Garelemente 6 zueinander korrespondierend angeordnet sind. Die Garelemente 6 weisen entlang ihrer Wandfläche 9 jeweils Garöffnungen 10 auf. Die Querschnittsfläche der offenen Enden 7 der Garelemente 6 ist dabei jeweils so gewählt, sie ein Mehrfaches der Querschnittsfläche jeder der Garöffnungen 10 in den Garelementen 6 beträgt. Die geschlossenen Enden 8 der Garelemente 6 sind jeweils als Spitze 12 ausgebildet.

An der Platte 2 sind im Bereich von den Abstandsstabbefestigungen 4 Abstandsstäbe 5 vorgesehen, die massiv mit zwei Enden 11a, 11b ausgebildet sind. Die Abstandsstäbe 5 sind derart mit der Platte 2 verbunden, dass jeweils eines der Enden 11a korrespondierend zu einer der Abstandstabbefestigungen 4 angeordnet ist. Sowohl die Garelemente 6 also auch die Abstandsstäbe 5 sind fest mit der Platte 2 verbunden, parallel zueinander und senkrecht zu der Platte 2 angeordnet. Die Länge der Abstandsstäbe 5 ist so gewählt, dass ihre von der Platte 2 wegweisenden Enden 11b über die geschlossenen Enden 8 der Garelemente 6 hinausragen. Die Anordnung der Abstandsstäbe 5 auf der Platte 2 ist so gewählt, dass ein stabiles Aufstehen des Einsatzelements 1 auf den von der Platte 2 wegweisenden Enden 11b der Abstandsstäbe 5 gewährleistet ist, wenn das Einsatzelement 1 mit den von der Platte 2 wegweisenden Enden 11b der Abstandsstäbe 5 auf eine Unterlage aufgestellt wird. Hierzu würde das Einsatzelement gegenüber der Darstellung in der Figur 2 umgedreht werden.

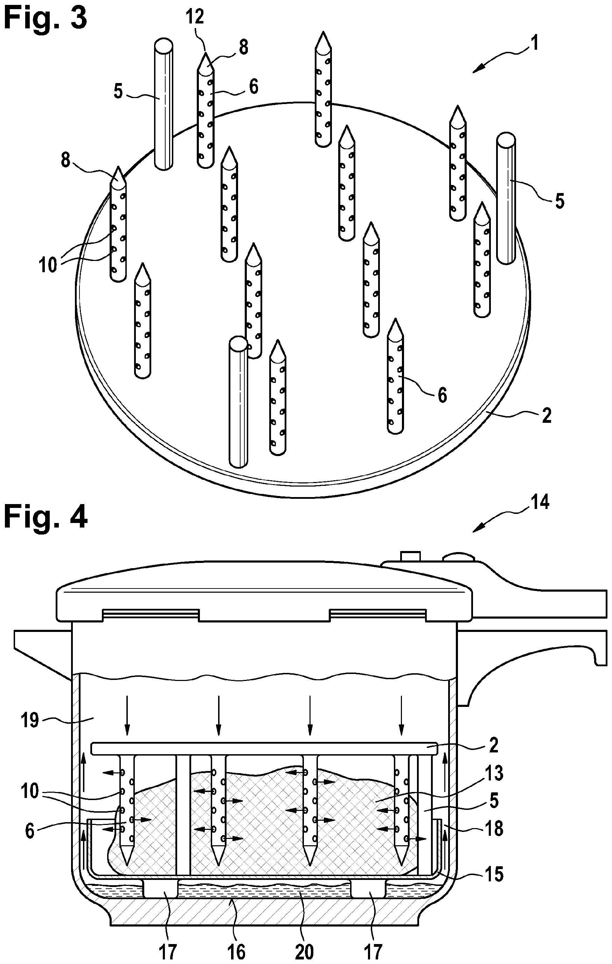

Figur 3 zeigt das Ausführungsbeispiel des Einsatzelements 1 der Figuren 1 und 2 in perspektivischer Darstellung. Die Garelemente 6 sind gleichmäßig über die Fläche der Platte 2 verteilt. Die Abstandsstäbe 5 sind gleichmäßig entlang des Randbereichs der Platte 2 verteilt. Der Abstand zwischen den Garelementen 6 ist so gewählt, dass er für ein vorgegebenes Gargut, wie hier beispielsweise Fleisch, geeignet oder optimiert ist.

Auf das hier gezeigte Einsatzelement 1 kann ein geeignetes Gargut 13 (Fig. 4) auf die Garelemente 6 aufgebracht werden. Bei diesem Ausführungsbeispiel des Einsatzelements 1 ist als Gargut Fleisch oder Fisch oder ein anderes festes stückartiges Gargut besonders geeignet. Die Länge der Garelemente 6 ist in diesem Ausführungsbeispiel so gewählt, dass die geschlossenen Enden 8 bzw. die Spitzen 12 der Garelemente 6 in dem Gargut 13 enden, so dass das Gargut 13 nicht durchstoßen wird. Hierdurch wird erreicht, dass keine Flüssigkeit des Garguts 13 aus dem Gargut 13 herauslaufen kann, wenn das Einsatzelement 1 in umgedrehter Position zum Garen des Garguts 13 in eine Garvorrichtung 14 eingebracht wird, wie dies in Figur 4 dargestellt ist.

Figur 4 zeigt ein Ausführungsbeispiel einer Garvorrichtung 14 gemäß der Erfindung im Betrieb, also während eines erfindungsgemäßen Garprozesses. Als Garvorrichtung 14 wird hier ein Schnellkochtopf verwendet. In dem Schnellkochtopf ist ein Auflageelement 15 angeordnet, bei welchem es sich um einen einsetzbares Element handeln kann. Das Auflageelement 15 ist zu der inneren Bodenfläche 16 der Garvorrichtung 14 beabstandet angeordnet, so dass eine Garflüssigkeit 20 in den unteren Bereich der Garvorrichtung 14 zwischen der inneren Bodenfläche 16 der Garvorrichtung 14 und dem Auflageelement 15 eingebracht werden kann. Zur Erzeugung des gewünschten Abstands zwischen dem Auflageelement 15 und der inneren Bodenfläche 16 der Garvorrichtung 14 sind hier Fußelemente 17 vorgesehen. Das Auflageelement 15 weist einen Querschnitt auf, der kleiner ist als der innere Querschnitt der Garvorrichtung 14, so dass ein Zwischenbereich 18 zwischen der Garvorrichtung 14 und dem Auflageelement 15 gewährleistet ist, durch welchen bei dem Garprozess Dampf nach oben, in den oberen Bereich der Garvorrichtung 14 steigen kann.

Das Einsatzelement 1 ist derart ausgebildet, dass es mit den Abstandsstäben 5 auf das Auflageelement 15 aufgestellt werden kann und dass ein geeigneter Abstand von der Platte 2 zu dem oberen Ende der Garvorrichtung 14 gegeben ist, so dass sich in dem oberen Bereich 19 der Garvorrichtung 14 ausreichend Dampf zum Garen des Garguts 13 ansammeln kann. Der Querschnitt der Platte 2 ist so gewählt, dass er kleiner als der innere Querschnitt der Garvorrichtung 14 ist, so dass das Einsatzelement 1 so in die Garvorrichtung 14 eingesetzt werden kann, dass seitlich während des Garprozesses Dampf nach oben steigen kann. Beispielsweise ist für Dampfgartöpfe von einem Durchmesser zwischen 28 und 30 cm ein Einsatzelement 1 mit einem Durchmesser von etwa 25 cm geeignet. Alternativ oder zusätzlich können auch Öffnungen in der Platte vorgesehen sein, z.B. Garmediumsöffnungen 3, die nicht mit Garelementen 6 verbunden sind. In dem gezeigten Ausführungsbeispiel liegt das Gargut 13 auf der Auflagefläche des Auflageelements 15 auf. Mit den Abstandsstäben 5 wird zum einen die Stabilität des Einsatzelements 1 in der Garvorrichtung 14 gewährleistet. Zum anderen sorgen die Abstandsstäbe 5 dafür, dass die geschlossenen Enden 8 der Garelemente 6 zu dem Auflageelement 15 beabstandet sind und nicht auf diesem aufstehen. Hierdurch wird sichergestellt, dass das Gargut 13 von den Garelementen 6 nicht durchstochen werden kann, so dass die gesamte Flüssigkeit oder der gesamte Saft des Garguts 13 während des gesamten Garprozesses in dem Gargut 13 erhalten bleibt.

Wenn das Gargut 13 auf das Einsatzelement 1 aufgebracht ist bzw. die Garelemente des Eisatzelements 1 in das Gargut 13 eingebracht sind, werden Garöffnungen 10 der Garelemente 6 mit dem Gargut 13 belegt. Es müssen dabei nicht alle der Garöffnungen 10 mit dem Gargut 13 belegt sein.

Wenn die Garvorrichtung 14 geschlossen ist, kann der Garprozess ausgeführt werden. Durch Erhitzen der Garvorrichtung 14 entsteht aus der Garflüssigkeit 20 Dampf, der als Garmedium in den oberen Bereich 19 der Garvorrichtung 14 gelangt, wie dies durch Pfeile angedeutet ist. Von dort gelangt Dampf durch die Garmediumsöffnungen 3 der Platte 2 und durch die offenen Enden 7 der Garelemente 6 in die Garelemente 6, wie dies ebenfalls durch Pfeile angedeutet ist. Da die Garelemente 6 auf der von der Platte 2 wegweisenden Seite geschlossene Enden 8 aufweisen, baut sich in den Garelementen 6 durch den Dampf ein Druck auf. An den nicht belegten Garöffnungen 10 der Garelemente 6 findet ein Druckausgleich mit dem Dampfdruck außerhalb der Garelemente 6 statt, so dass diese keine Auswirkungen auf den Garprozess haben. An den Garöffnungen 10 der Garelemente 6, die mit dem Gargut 13 belegt sind, entsteht aufgrund des dampfförmigen Garmediums ein höherer Druck auf das Gargut 13 an diesen Stellen. Hierdurch erfolgt in den Bereichen des Garguts 13 in der Umgebung der Garöffnungen 10 ein Garen des Garguts 13. Das Gargut 13 wird also ausgehend von den Garöffnungen 10 der Garelemente 6 von innen gegart. In dem hier gezeigten Ausführungsbeispiel erfolgt dieser Garprozess im Innern des Garguts 13 zusätzlich zu dem Garprozess, der durch das herkömmliche Dampfgaren in der Dampfgarvorrichtung erzielt wird. Es kann somit ein deutlich schnelleres Garen des Garguts 13 erzielt werden. Sowohl Anzahl, Anordnung, Form, Größe und andere Parameter der Garelemente und der Garöffnungen 10 in den Garelementen 6 können so gewählt werden, wie sie für eine spezielle Anwendung, insbesondere ein vorgegebenes Gargut und eine vorgegeben Garvorrichtung oder für vorgegebene Kombinationen daraus optimal geeignet sind.

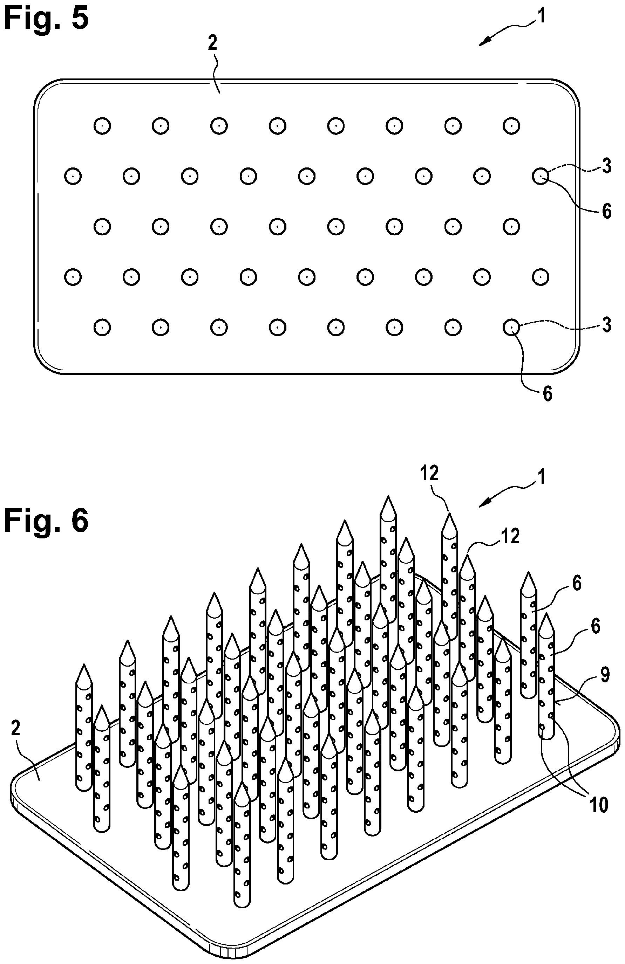

In den Figuren 5 und 6 ist ein weiteres Ausführungsbeispiel eines erfindungsgemäßen Einsatzelements 1 gezeigt. Hier ist eine Platte 2 mit einer rechteckigen Form gewählt, welche für entsprechend rechteckförmige Dampfgarvorrichtungen geeignet ist. Derartige Dampfgarvorrichtungen sind insbesondere in der Gastronomie verbreitet, wie Dampföfen oder Dampfgarer. Das Prinzip und die Funktionsweise entsprechen dem oben beschriebenen Ausführungsbeispiel des erfindungsgemäßen Einsatzelements 1. Figur 5 zeigt eine Draufsicht auf das Einsatzelement 1. In der Platte 2 sind Garmediumsöffnungen 3 vorgesehen, welche gleichmäßig über die Fläche der Platte 2 verteilt sind. Wie in Figur 6 dargestellt, sind im Bereich der Garmediumsöffnungen 3 Garelemente 6 fest mit der Platte 2 verbunden. Dabei befindet sich jeweils das offene Ende 7 der Garelemente 6 in dem Bereich der Garmediumsöffnungen 3 der Platte 2 und die geschlossenen Enden 8 der Garelemente 8 weisen von der Platte 2 weg. Die Garelemente 6 weisen entlang ihrer Wandfläche 9 jeweils Garöffnungen 10 auf.

In diesem gezeigten Ausführungsbeispiel der Erfindung sind keine Abstandsstäbe oder andere Abstandselemente vorgesehen, durch welche ein Abstand der geschlossenen Enden der Garelemente 6 zu einer Fläche der Garvorrichtung bewirkt würde. Ein derartiges erfindungsgemäßes Einsatzelement 1 ist insbesondere zum Garen von Reis, Hülsenfrüchten und ähnlichem, insbesondere körnigem Gargut geeignet, das aus einzelnen Teilchen besteht, in die die Garelemente nicht eingeführt werden sollen. Bei derartigen Gargut kann beispielsweise zunächst das Gargut in die Garvorrichtung 14 auf ein Auflageelement, wie eine Schale, ein Tablett oder ähnliches, eingebracht werden, und dann das Einsatzelement 1 in die Garvorrichtung 14 eingesetzt werden. Danach wird das Einsatzelement 14 gemäß der Darstellung der Figur 6 umgedreht in die Dampfgarvorrichtung eingebracht, so dass die geschlossenen Enden der Garelemente 6 nach unten weisen. Hierbei werden die Garelemente 6 in das Gargut eingeführt bis die Garelemente 6 auf den Spitzen 12 aufstehen. Bei einem körnigen Gargut wird durch die Spitzen 12 an den geschlossenen Enden 8 der Garelemente 6 verhindert, dass die einzelnen Teile oder Körner des Garguts während des Garprozesses zerdrückt werden.

Abstandselemente sind bei dieser Anwendung nicht erforderlich, da es vorteilhaft ist, wenn die Garelemente 6 des Einsatzelements 1 bis auf die Unterlage für das Gargut reichen. So kann das Gargut über seine gesamte Höhe in der Garvorrichtung während des Garprozesses gleichmäßig von innen gegart werden. Wie in dem oben beschriebenen Ausführungsbeispiel der Erfindung erfolgt dieser erfindungsgemäße Garprozess im Innern des Garguts zusätzlich zu dem herkömmlichen Garprozess von außen. Entsprechend wird eine Flüssigkeit zum Garen des Garguts unterhalb des Tabletts oder eines anderen Auflageelements für das Gargut in die Garvorrichtung eingebracht und zum Kochen gebracht, so dass Dampf aufsteigt und das Gargut sowohl von außen als auch durch die Garöffnungen der Garelemente gart.

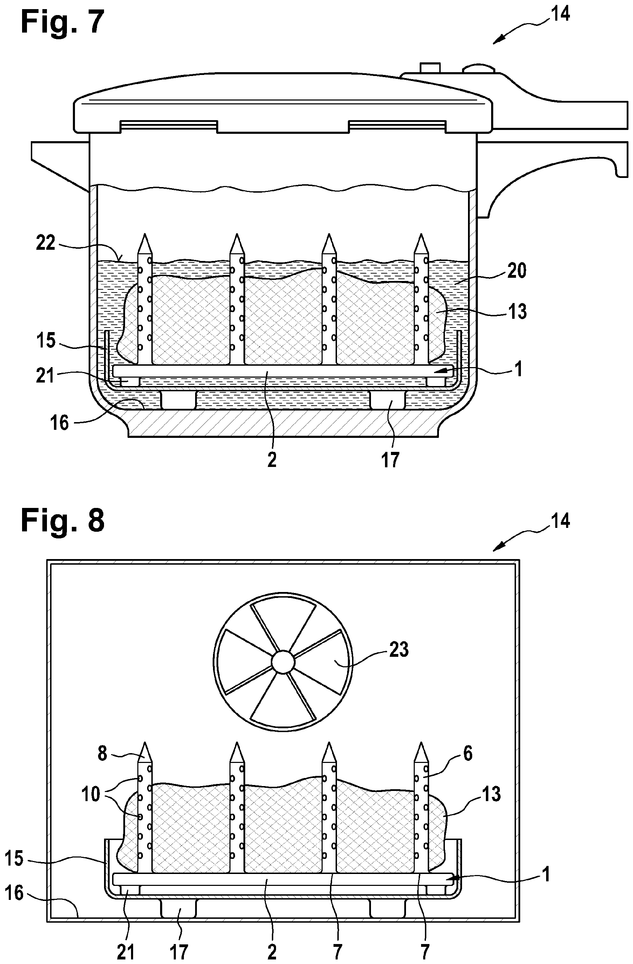

In Figur 7 ist ein Ausführungsbeispiel einer erfindungsgemäßen Garvorrichtung 14 mit einem erfindungsgemäßen Einsatzelement 1 gezeigt, bei dem als Garmedium eine Garflüssigkeit 20 verwendet wird. Das Einsatzelement 1 ist so ausgebildet, dass die Garelemente eine Länge aufweisen, die so gewählt ist, dass einzelne Garöffnungen 10 der Garelemente 6 nicht mit dem vorgegebenen Gargut bedeckt werden, wenn das Gargut 13 auf das Einsatzelement 1 aufgebracht wird bzw. wenn die Garelemente des Eisatzelements 1 in das Gargut 13 eingebracht werden. Erfindungsgemäß wird an dem Einsatzelement 1 oder in der Garvorrichtung 14 eine erste Abstandseinrichtung vorgesehen, die im gezeigten Ausführungsbeispiel durch Abstandsfüße 21 gebildet ist. Die Abstandsfüße 21 können vorzugsweise an der Platte 2 des Einsatzelements 1 befestigt sein. Es ist aber auch möglich eine separate erste Abstandseinrichtung zu verwenden. In dem gezeigten Ausführungsbeispiel der Erfindung wird als Gargut 13 Fleisch oder ein anderes stückartiges Gargut verwendet, welches auf die Garelemente 6 des Einsatzelements 1 so aufgebracht ist, dass es auf der Platte 2 aufliegt und dass nicht alle Garöffnungen 10 der Garelemente 6 mit dem Gargut 13 belegt sind. Die Belegung der Garöffnungen 10 ist so gewählt, dass pro Garelement 6 ein bis zwei Garöffnungen frei bleiben und aus dem Gargut 13 herausragen.

Das Einsatzelement 1 wird mit dem so darauf aufgebrachten Gargut 13 derart in die Garvorrichtung 14 eingebracht, dass die Platte 2 mit den Abstandsfüßen 21 auf einer Bodenfläche der Garvorrichtung 14 aufsteht. Als Bodenfläche ist hier die Fläche eines Auflageelements 15 gewählt, das mit Fußelementen 17 auf dem Boden der Garvorrichtung 14 aufsteht.

Als Garvorrichtung 24 wird hier ein Topf verwendet, welcher für den Garprozess verschließbar ist. Der Topf wir für den Garprozess soweit mit der Garflüssigkeit 20 gefüllt, dass alle Garöffnungen 10 der Garelemente 6, also auch die nicht mit dem Gargut 13 belegten Garöffnungen 10, mit der Garflüssigkeit bedeckt sind. Es kann sich sowohl um einen Dampfkochtopf als auch um einen normalen Kochtopf handeln. Das Einsatzelement 1 kann auch mit den Abstandsfüßen 21 direkt auf den Boden der Garvorrichtung 14 gestellt werden. Wesentlich ist, dass der Abstand der Platte 2 bzw. der offenen Enden 7 der Garelemente 6 so groß ist, dass die Garflüssigkeit 20 durch die offenen Enden 7 der Garelemente 6 in die Garelemente 6 gelangen kann. Entsprechend muss die Fläche des Auflageelements 15 mit ausreichend vielen Löchern versehen sein oder gitterartig ausgebildet sein, so dass die Garflüssigkeit 20 gut in die Garelemente 6 gelangen kann.

Wenn das Einsatzelement 1, das Gargut 13 und die Garflüssigkeit 20 in der Garvorrichtung 14 angeordnet sind, füllt die Garflüssigkeit 20 die Garelemente 6 bis zu einem Niveau aus, wie es dem Flüssigkeitsniveau 22 der Garflüssigkeit 20 in der Garvorrichtung 14 entspricht. Wenn die Garflüssigkeit 20 erhitzt wird, steigt die Garflüssigkeit 20 in den Garelementen 6 nach oben und kann aus den freien, nicht mit Gargut belegten Garöffnungen 10 der Garelemente 6 aus den Garelementen 6 nach außen und zurück in die Garflüssigkeit 20, die sich in der Garvorrichtung 14 befindet, gelangen. Dies ist vorteilhaft, da sich die in den Garelementen 6 austeigende Garflüssigkeit 20 während des Garprozesses normalerweis innerhalb der Garelemente 6 abkühlen würde, da das Gargut 13 im Innern und kälter ist. Somit sind auch die Garelemente 6 in dem Gargut 13 kälter als die Garflüssigkeit 20 in der Garvorrichtung 13. Wenn die Garflüssigkeit 20 im oberen Bereich der Garelemente 6 wieder in die Garflüssigkeit 20 in der Garvorrichtung 14 gelangt, kann neue warme Garflüssigkeit 20 von unten in die Garelemente 6 nachgeliefert werden. Es entsteht so ein Kreislauf, bei dem Wärme kontinuierlich in die Garelemente 6 nachgeliefert wird. Auch bei diesem Ausführungsbeispiel der Erfindung kann der Garprozess des Garguts 13 gleichzeitig von innen und von außen erfolgen.

Figur 8 zeigt ein weiteres Ausführungsbeispiel einer erfindungsgemäßen Garvorrichtung 14, in der ein Einsatzelement 1 gemäß der Erfindung vorgesehen ist. Die Garvorrichtung 14 ist als Umluftofen ausgebildet, in dem als Garmedium Luft verwendet wird, die mittels eines Ventilators 23 in der Garvorrichtung 14 zirkuliert. Es entsteht hierdurch ein Druckgefälle, aufgrund dessen die in der Garvorrichtung 14 unten erwärmte Luft nach oben steigt. Das Einsatzelement 1 entspricht im Prinzip dem Ausführungsbeispiel des Einsatzelements 1 aus dem der Figur 7. Es kann in der als Umluftofen ausgebildeten Garvorrichtung 14 auch in vergleichbarer Weise angeordnet werden. Die Platte 2 ist mittels Abstandsfüßen 21 auf einem Auflageelement 15 angeordnet. Das Auflageelement 15 ist auf Fußelementen 17 angeordnet. Das Auflageelement 15 ist siebartig ausgebildet oder weist so viele Löcher auf, dass die als Garmedium verwendete Luft im Wesentlichen ungehindert in der Garvorrichtung zirkulieren kann. Wesentlich ist, dass die offenen Enden 7 der Garelemente 6 so weit von der Inneren Bodenfläche 16 der Garvorrichtung 14 beabstandet sind, und dass evtl. dazwischenliegende Auflageflächen so durchlässig sind, dass die Luft ungehindert zirkulieren kann und durch das Auflageelement 15 in die nach unten weisenden offenen Enden 7 der Garelemente 6 gelangen kann.

Auch in diesem Ausführungsbeispiel der Erfindung sind Garöffnungen 10 vorgesehen, die nicht mit dem Gargut 13 belegt werden, entsprechend der Anordnung der Figur 7. An den nicht mit Gargut belegten Garöffnungen 10 der Garelemente 6 kann die als Garmedium verwendete Luft wieder nach außen in die Garvorrichtung 14 gelangen. Der Abstand von der inneren Bodenfläche 16 der Garvorrichtung 14 zu den offenen Enden 7 der Garelemente 6 muss so groß sein, dass unten in der Garvorrichtung 14 angewärmte Luft ungehindert in die Garöffnungen 7 gelangen kann. In den Garelementen 6 wird während des Garprozesses die unten einströmende warme Luft abgekühlt, solange die Garelemente 6 eine niedrigere Temperatur als die Luft aufweisen. Solange das Gargut 13 von innen noch nicht ausreichend erwärmt ist kühlt das Gargut 13 die Garelemente 7 ab. Daher ist es für einen effektiven Garprozess wichtig, dass die in den Garelementen 7 nach oben strömende Luft aus den Garelementen 7 austreten kann und sich mit der übrigen sich in der Garvorrichtung befindenden Luft mischt und wieder erwärmt wird. Es wird bei diesem Ausführungsbeispiel der Erfindung ein ähnlicher Wärmekreislauf des Garmediums erreicht wie bei dem Ausführungsbeispiel der Figur 7. Im Falle des Erwärmens mittels Luft ist es vorteilhaft, wenn das Einsatzelement aus einem gut wärmeleitenden Material, insbesondere aus Metall gebildet ist. Das Einsatzelement kann aber auch aus einem hitzebeständigen Kunststoff, einem anderen hitzebeständigen Material oder aus einer Mischung aus verschiedenen hitzebeständigen Materialien gebildet sein. Für welche Anwendung und Ausführungsform ein bestimmtes Material vorteilhaft ist, kann der Fachmann im Einzelfall entscheiden.

Es sei darauf hingewiesen, dass die gezeigten Ausführungsbeispiele keine Einschränkung der Erfindung darstellen. Es sind alle Kombinationen oder Abwandlungen der Garvorrichtung, des Einsatzelements und des Garverfahrens, die der Fachmann für spezielle Anwendungen anfertigen oder durchführen kann, im Rahmen der Erfindung enthalten. So können unterschiedliche Formen und Größen von Einsatzelementen bzw. Garvorrichtungen verwendet werden. Es können für unterschiedliche Anwendungen Eisatzelemente mit oder ohne Abstandselemente verwendet werden. Der Abstand zwischen den Garelementen kann je nach Bedarf an das Gargut angepasst und variiert werden. So wird beispielsweise zum Garen von Fleisch ein größerer Abstand zwischen den Garelementen gewählt als zum Garen von Reis und Hülsenfrüchten, oder es werden unterschiedliche Abstände zwischen den Garelementen für unterschiedliche Garvorrichtungen oder unterschiedlich Größen von Garvorrichtungen verwendet. Es können auch längenverstellbare Abstandselemente verwendet werden, so dass dasselbe Einsatzelement für verschiedene Anwendungen verwendet werden kann. Auch die Garelemente können längenverstellbar ausgeführt werden, so dass sie auf unterschiedliches Gargut und/oder auf unterschiedliche Mengen des Garguts angepasst werden können. Die Garelemente können auch lösbar mit der Platte bzw. dem Haltemittel verbunden sein, sie sei bei Bedarf gewechselt, in ihrer Anzahl, ihrem Abstand oder auf andere Weise variiert werden können. Auch können gemäß der Erfindung alle denkbaren Garvorrichtungen verwendet werden. Das Einsatzelement muss nur geeignet ausgebildet sein, um für ein gewünschtes Gargut in einer gewählten Garvorrichtung für eine gewählte Garart einsetzbar zu sein.

Wesentlich für die Erfindung ist, dass ein oder mehrere Garelemente derart in einem Gargut angeordnet werden, dass ein Garprozess im Innern des Garguts erfolgen kann, indem ein Garmedium durch das/die erfindungsgemäße Garelement/e geleitet wird und durch Garöffnungen in dem/den Garelementen mit dem Gargut im dessen Innern in Kontakt kommt. Dieser Garprozess von Innen kann auch ohne ein Garen von außen erfolgen. Er kann aber auch mit einem herkömmlichen Garprozess von außen in beliebiger geeigneter Weise kombiniert werden.

### Bezugszeichenliste

- 1: Einsatzelement
- 2: Platte
- 3: Garmediumsöffnung
- 4: Abstandsstabbefestigung
- 5: Abstandsstab
- 6: Garelemente
- 7: Offenes Ende der Garelemente
- 8: Geschlossenes Ende der Garelemente
- 9: Wandfläche der Garelemente
- 10: Garöffnungen in den Garelementen
- 11: 11a, 11b, Enden der Abstandsstäbe
- 12: Spitze der Garelemente
- 13: Gargut
- 14: Garvorrichtung
- 15: Auflageelement
- 16: Innere Bodenfläche der Garvorrichtung
- 17: Fußelemente
- 18: Zwischenbereich (Garvorrichtung, Auflageelement)
- 19: Oberer Bereich der Garvorrichtung
- 20: Garflüssigkeit
- 21: Abstandsfüße
- 22: Flüssigkeitsniveau
- 23: Ventilator

## Patentansprüche

1. Einsatzelement für eine Garvorrichtung zum Garen eines Garguts mittels eines Garmediums,
mit einer ebenen Platte (2), in der Garmediumsöffnungen (3) vorgesehen sind, die gleichmäßig über einen Querschnitt der Platte (2) verteilt angeordnet sind,
mit rohrförmigen Garelementen (6), die jeweils entlang ihrer Wandfläche Garöffnungen (10) aufweisen,
wobei jedes der Garelemente (6) ein offenes Ende (7) und ein geschlossenes Ende (8) aufweist und mit dem offenen Ende jeweils derart an einer der Garmediumsöffnungen (3) an der Platte (2) befestigbar ist,
dass die Garelemente (6) parallel zueinander und von der Platte (2) wegweisend angeordnet sind, und
dass das in der Garvorrichtung zum Garen des Garguts zu verwendende Garmedium jeweils durch die Garmediumsöffnung (3) und durch das offene Ende (7) der Garelemente (6) in das jeweilige Garelement (6) gelangen kann.

2. Einsatzelement für eine Garvorrichtung nach Anspruch 1, **dadurch gekennzeichnet, dass** der Innendurchmesser der Garelemente (6) jeweils kleiner als 1cm ist.

3. Einsatzelement für eine Garvorrichtung nach einem der vorangehenden Ansprüche, **dadurch gekennzeichnet, dass** die Garelemente (6) jeweils in einem gleichen Abstand zueinander angeordnet sind, der zwischen 2 und 4 cm beträgt.

4. Einsatzelement für eine Garvorrichtung nach einem der vorangehenden Ansprüche, **dadurch gekennzeichnet, dass** die Garelemente (6) einen Innendurchmesser aufweisen, der maximal 8 mm beträgt und in einem gleichen Abstand zueinander angeordnet sind, der zwischen 3 und 4 cm beträgt.

5. Einsatzelement für eine Garvorrichtung nach einem der vorangehenden Ansprüche, **dadurch gekennzeichnet, dass** die Garelemente (6) einen Innendurchmesser aufweisen, der maximal 9 mm beträgt und in einem gleichen Abstand zueinander angeordnet sind, der zwischen 2 und 3 cm beträgt.

6. Einsatzelement für eine Garvorrichtung nach einem der vorangehenden Ansprüche, **dadurch gekennzeichnet, dass** die Garöffnungen (10) entlang der Wand des jeweiligen Garelements (6) zueinander versetzt angeordnet sind.

7. Einsatzelement für eine Garvorrichtung nach einem der vorangehenden Ansprüche, **dadurch gekennzeichnet, dass** die Garöffnungen (10) entlang der Längsrichtung der Garelemente (6) in Reihen angeordnet sind, wobei die Garöffnungen (10) auf zueinander benachbarten Reihen in Längsrichtung zueinander versetzt angeordnet sind.

8. Einsatzelement für eine Garvorrichtung nach einem der vorangehenden Ansprüche, **dadurch gekennzeichnet, dass** die zueinander benachbarte Garelemente (6) auf der Platte (2) derart angeordnet sind, dass die Garöffnungen (10) von benachbarten Garelementen (6) zueinander versetzt angeordnet sind.

9. Einsatzelement für eine Garvorrichtung nach einem der vorangehenden Ansprüche, **dadurch gekennzeichnet, dass** das Garelement (6) und die Platte (2) miteinander verbunden und einstückig ausgebildet sind.

10. Einsatzelement für eine Garvorrichtung nach einem der vorangehenden Ansprüche, **dadurch gekennzeichnet, dass** die Garelemente (6) jeweils stäbchenförmig mit einer Spitze (2) an dem geschlossenen Ende (8) ausgebildet sind.

11. Einsatzelement für eine Garvorrichtung nach einem der vorangehenden Ansprüche, **dadurch gekennzeichnet, dass** eine erste Abstandseinrichtung vorgesehen ist, mit welcher ein vorgegebener Abstand zwischen den offenen Enden (7) der Garelemente (6) und einer vorgegebenen Fläche der Garvorrichtung (14) gewährleistet ist.

12. Einsatzelement für eine Garvorrichtung nach einem der vorangehenden Ansprüche, **dadurch gekennzeichnet, dass** an der Platte (2) Abstandselemente, insbesondere Abstandsstäbe (5), vorgesehen sind, deren Anordnung und Länge so gewählt ist, dass ihre von der Platte (2) wegweisenden Enden über die geschlossenen Enden (8) der Garelemente (6) hinausragen, so dass die Platte (2) in umgedrehten Zustand auf den Abstandselementen zum Stehen kommt.

13. Einsatzelement für eine Garvorrichtung nach einem der vorangehenden Ansprüche, **dadurch gekennzeichnet, dass** das Einsatzelement (1) aus Metall und/oder aus hitzebeständigem Kunststoff und/oder einem anderen hitzebeständigen Materialgebildet ist.

14. Garvorrichtung zum Garen eines Garguts mittels eines Garmediums,
**dadurch gekennzeichnet, dass** die Garvorrichtung (14) ein Einsatzelement (1) gemäß den vorhergehenden Ansprüchen umfasst, wobei Größe und Form der Platte (2) geeignet zur Anordnung in der Garvorrichtung (13) gewählt sind und
Länge, Querschnitt und Form der Garelemente (6) so gewählt sind, dass die Garelemente (6) in ein vorgegebenes Gargut (13) derart einbringbar sind, dass sie einen vorgegebenen Bereich des Garguts (13) durchdringen, und
die Platte (2) so anordenbar ist, dass während eines Garprozesses das in der Garvorrichtung zum Garen des Garguts verwendete Garmedium jeweils durch die offenen Enden (7) der Garelemente (6) in das jeweilige Garelement (6) zum Garen des Garguts von innen gelangt.

15. Garelement , **dadurch gekennzeichnet, dass** es zur Verwendung in einem Einsatzelement gemäß den Ansprüchen 1 bis 11 geeignet ist.
